# EUROPEAN PATENT APPLICATION

(11) **EP 4 772 788 A1**
(43) Date of publication of application: **08.07.2026**
(21) Application number: 24905671.4
(22) Date of filing: 06.09.2024
(51) Int. Cl.: F17D 3/01, A47L 15/48, F25B 41/00, G05D 7/06

(54) **THROTTLING DEVICE AND TABLEWARE TREATMENT DEVICE**

(30) Priority: 19.12.2023 CN 202311751240; 19.12.2023 CN 202323466465 U
(71) Applicant: Wuhu Midea Smart Kitchen Appliance Manufacturing Co., Ltd., Wuhu, Anhui 241000 (CN)
(72) Inventor: LIU, Shanshan, Wuhu, Anhui 241000 (CN); GENG, Jie, Wuhu, Anhui 241000 (CN); ZHU, Xiqing, Wuhu, Anhui 241000 (CN); LU, Zhenliang, Wuhu, Anhui 241000 (CN)
(74) Representative: Ran, Handong
(86) International application number: PCT/CN2024/117408
(87) International publication number: WO 2025/130179

(57) **Abstract**

A throttling device and a tableware treatment device. The throttling device is arranged between two heat exchangers and comprises a plurality of throttling assemblies. Each throttling assembly comprises a throttling valve and a control valve connected in series to the throttling valve, wherein the throttling valves of the plurality of throttling assemblies are connected in series, and the control valve of at least one of the throttling assemblies is connected in parallel to at least one of the other throttling assemblies. The tableware treatment device comprises: a housing having an accommodating cavity, and an air outlet, an air return opening, a water outlet and a water return opening that are in communication with the accommodating cavity, the accommodating cavity being used for accommodating tableware; an air return channel, a fan, a first heat exchanger and a second heat exchanger, the air return channel being in communication with the air outlet and the air return opening, and the fan, the first heat exchanger and the second heat exchanger being all arranged in the air return channel, with the first heat exchanger being arranged close to the air outlet and the second heat exchanger being arranged close to the air return opening; a heat-pump channel, a circulating pump and a third heat exchanger, the heat-pump channel being in communication with the water outlet and the water return opening, and the circulating pump and the third heat exchanger being arranged in the heat-pump channel; a compressor having an outlet connected to the first heat exchanger and the third heat exchanger, and an inlet connected to the second heat exchanger or the first heat exchanger; and the throttling device arranged between any two of the first heat exchanger, the second heat exchanger and the third heat exchanger.

## Description

### CROSS-REFERENCE TO RELATED APPLICATIONS

This application claims priority to Chinese Patent Application No. 202311751240.0 and Chinese Patent Application No. 202323466465.X, both filed on December 19, 2023, the contents of which are herein incorporated by reference in their entireties.

### TECHNICAL FIELD

The present disclosure relates to the technical field of electrical appliances, and in particular to a throttling device and a tableware treatment device.

### BACKGROUND

A tableware treatment device is an intelligent household appliance product that may replace manual tableware treatment and is widely applied nowadays. During a tableware washing process, washing water may be delivered to each rotating spray arm by a circulation pump so as to continuously spray the water onto tableware and wash the tableware, thereby achieving a purpose of cleaning the tableware. To further shorten a washing time of the tableware treatment device, a washing system of an existing tableware treatment device may adopt an electric heater to raise a temperature of the washing water. When the washing water is circularly sprayed onto the tableware, the high-temperature washing water may flush contaminants off the tableware and transfer heat to the tableware, such that the tableware treatment device may obtain both a high cleaning rate and a high drying rate within a short washing time. During the working cycle, since a heating energy consumption of the washing water may account for more than 80% of an overall energy consumption of the tableware treatment device, reducing the heating energy consumption of the washing water is therefore a key technical direction for reducing the energy consumption of the tableware treatment device.

A throttling device may be required in both a drying process and a heat pump process of the tableware treatment device. The throttling device may be configured to change a state of a heat exchange medium so as to promote circulation of the heat exchange medium. In the related art, an existing throttling device is generally provided as an independent and individual throttling component, resulting in poor throttling performance and likely leading to waste of heat sources.

### SUMMARY

The present disclosure aims to solve a technical problem of poor throttling performance at least to some extent. Accordingly, some embodiments of the present disclosure provide a throttling device and a tableware treatment device.

According to a first aspect of the present disclosure, some embodiments of the present disclosure may provide a throttling device. The throttling device is disposed between two heat exchangers and includes a plurality of throttling assemblies. Each of the plurality of throttling assemblies includes a throttling valve and a control valve connected to the throttling valve in series. The control valve of at least one of the plurality of throttling assemblies is connected in parallel to at least one of the other of the plurality of throttling assemblies.

Each throttling assembly may include the throttling valve and the control valve connected to the throttling valve in series. The control valve of at least one of the throttling assemblies being connected in parallel to at least one of the other throttling assemblies, may indicate that the control valve of one throttling assembly is connected to another throttling assembly in parallel. In a case where the control valve of the one throttling assembly is turned on, the another throttling assembly may be short-circuited and only the throttling valve corresponding to the control valve of the one throttling assembly may be conducted. In a case where the control valve of the one throttling assembly is turned off and the control valve of the another throttling assembly connected in parallel to the control valve of the one throttling assembly is turned on, two throttling valves may be conducted. It can be understood that, the control valves may cooperate with each other to conduct different numbers of the throttling valves to obtain different flow rates. In other words, by cooperation of the different control valves, the number of the throttling valves may be adjusted to regulate the flow rate. In this way, throttling valves with different flow rates may not be required, thereby reducing the cost of variable flow regulation.

In some embodiments, the plurality of throttling assemblies may include a first throttling assembly and a second throttling assembly.

In some embodiments, the first throttling assembly may include a first throttling valve and a first control valve.

In some embodiments, the second throttling assembly may include a second throttling valve and a second control valve.

In some embodiments, the first control valve may be connected to the first throttling valve in series.

In some embodiments, the second control valve may be connected to the second throttling valve in series.

In some embodiments, the second control valve may be connected in parallel to the first throttling valve and the first control valve.

In some embodiments, the first control valve, the first throttling valve, and the second throttling valve may be connected in sequence.

In some embodiments, a first connection point may be defined between the first throttling valve and the second throttling valve. An end of the second control valve may be connected to the first connection point.

In some embodiments, an end of the second control valve away from the first connection point may be connected to an end of the first control valve away from the first throttling valve, forming an input point. An end of the second throttling valve away from the first throttling valve may form an output point.

In some embodiments, the first throttling valve and the second throttling valve may be connected in series.

According to a second aspect of the present disclosure, some embodiments of the present disclosure may provide a tableware treatment device. The tableware treatment device includes a housing, an air return channel, a fan, a first heat exchanger, a second heat exchanger, a heat pump channel, a circulation pump, a third heat exchanger, and a compressor. The housing defines an accommodating chamber, an air outlet, an air return port, a water outlet, and a water return port. The accommodating chamber is configured to accommodate a tableware. The air outlet, the air return port, the water outlet, and the water return port are in communication with the accommodating chamber. The air return channel is in communication with the air outlet and the air return port. The fan, the first heat exchanger, and the second heat exchanger are disposed in the air return channel. The first heat exchanger is disposed adjacent to the air outlet. The second heat exchanger is disposed adjacent to the air return port. The heat pump channel is in communication with the water outlet and the water return port. The circulation pump and the third heat exchanger are disposed in the heat pump channel. An outlet of the compressor is connected to the first heat exchanger and the third heat exchanger. An inlet of the compressor is connected to the second heat exchanger or the first heat exchanger.

The throttling device described in the first aspect is disposed between any two of the first heat exchanger, the second heat exchanger, and the third heat exchanger.

The tableware treatment device provided by the second aspect may share some technical effects with the throttling device provided by the first aspect, which will not be repeated herein.

In some embodiments, the throttling device may be disposed between the first heat exchanger and the second heat exchanger.

In some embodiments, an input point of the throttling device may be connected to the first heat exchanger.

In some embodiments, the input point of the throttling device may be connected to the second heat exchanger.

In some embodiments, the throttling device may be disposed between the third heat exchanger and one of the first heat exchanger and the second heat exchanger.

In some embodiments, an input point of the throttling device may be connected to the third heat exchanger.

In some embodiments, an output point of the throttling device may be connected to the first heat exchanger or the second heat exchanger.

In some embodiments, the air outlet and the air return port may be defined on a same side of the housing.

In some embodiments, the air return channel may define an air inlet and an air exhaust port.

In some embodiments, the air inlet may be defined between the first heat exchanger and the air outlet.

In some embodiments, the air exhaust port may be defined between the second heat exchanger and the air return port.

In some embodiments, in a case where the circulation pump is turned on, the air inlet and the air exhaust port may be turned on, and the air outlet and the air return port may be turned off.

### BRIEF DESCRIPTION OF THE DRAWINGS

In order to describe the technical solutions of some embodiments of the present disclosure more clearly, a brief introduction may be given below to the drawings that are required in the description of the embodiments. It is apparent that the drawings described below merely illustrate some embodiments of the present disclosure. Other drawings may further be obtained by those skilled in the art without inventive effort based on these drawings.
FIG. 1 is a schematic structural view of a first throttling device of a tableware treatment device according to some embodiments of the present disclosure.
FIG. 2 is another schematic structural view of the first throttling device of the tableware treatment device according to some other embodiments of the present disclosure.
FIG. 3 is a schematic structural view of the tableware treatment device according to some embodiments of the present disclosure, where the tableware treatment device is in a drying mode.
FIG. 4 is a schematic structural view of the tableware treatment device according to some embodiments of the present disclosure, where the tableware treatment device is in a heat pump mode and a second heat exchanger is configured to function as an evaporator.
FIG. 5 is a schematic structural view of the tableware treatment device according to some embodiments of the present disclosure, where the tableware treatment device is in the heat pump mode and a first heat exchanger is configured to function as an evaporator.

Reference numerals: 100, tableware treatment device; 110, housing; 112, accommodating chamber; 113, air outlet; 114, air return port; 115, water outlet; 116, water return port;
120, air return channel; 121, air inlet; 123, air exhaust port; 125, first air valve; 126, second air valve;
132, fan; 134, first heat exchanger; 136, second heat exchanger;
140, throttling device; 141, throttling assembly; 141a, throttling valve; 141b, control valve;
142, first throttling assembly; 142a, first throttling valve; 142b, first control valve; 143, second throttling assembly; 143a, second throttling valve; 143b, second control valve; 145, third throttling assembly; 145a, third throttling valve; 145b, third control valve; 146a, first connection point; 146b, input point; 146c, output point;
150, heat pump channel; 152, circulation pump; 154, third heat exchanger; 160, compressor; 162, inlet; 164, outlet; 172, first reversing valve; 174, second reversing valve.

### DETAILED DESCRIPTION

The technical solutions of the embodiments of the present disclosure may be described clearly and completely below in conjunction with the drawings of the embodiments of the present disclosure. It is apparent that the embodiments described are merely a part of the embodiments of the present disclosure, rather than all of the embodiments. Based on the embodiments of the present disclosure, all other embodiments obtained by those skilled in the art without inventive effort shall fall within the protection scope of the present disclosure.

It should be noted that all directional indications in the embodiments of the present disclosure may be used only to explain the relative positional relationships or motion conditions of the components under a certain posture. When the posture changes, the corresponding directional indications may be changed accordingly.

In the present disclosure, unless otherwise clearly specified and limited, the terms "connected" and "fixed" may be interpreted in a broad sense. For example, "fixed" may refer to fixed connection, detachable connection, or integrally formed; it may refer to mechanical connection or electrical connection; it may refer to a direct connection or an indirect connection through an intermediate medium, and it may also refer to internal communication or interaction between two components, unless otherwise clearly limited. For those skilled in the art, the meaning of the above terms in the present disclosure may be understood based on the context.

In addition, the descriptions involving "first," "second," and the like in the present disclosure may be used merely for descriptive purposes and may not be construed as indicating or implying relative importance or implicitly specifying the number of the indicated technical features. Therefore, features defined by "first" and "second" may expressly or implicitly include at least one such feature. Furthermore, the technical solutions among the various embodiments may be combined with each other, but such combination has to be based on the capability of realization by those skilled in the art. When the combination of technical solutions is contradictory or cannot be realized, it shall be understood that such combination does not exist and is not within the protection scope of the present disclosure.

A tableware treatment device is an intelligent household appliance product that may replace manual tableware treatment and is widely applied nowadays. During a tableware washing process, washing water may be delivered to each rotating spray arm by a circulation pump, by way of which the water is continuously sprayed onto tableware and wash the tableware, thereby achieving a purpose of cleaning the tableware. To further shorten a washing time of the tableware treatment device, a washing system of an existing tableware treatment device may adopt an electric heater to raise a temperature of the washing water. When the washing water is circularly sprayed onto the tableware, the high-temperature washing water may flush contaminants off the tableware and transfer heat to the tableware, such that the tableware treatment device may obtain both a high cleaning rate and a high drying rate within a short washing time. During the working cycle, since a heating energy consumption of the washing water may account for more than 80% of an overall energy consumption of the tableware treatment device, reducing the heating energy consumption of the washing water is therefore a key technical direction for reducing the energy consumption of the tableware treatment device.

A throttling device may be required in both a drying process and a heat pump process of the tableware treatment device. The throttling device may be configured to change a state of a heat exchange medium to promote circulation of the heat exchange medium. In the related art, an existing throttling device is generally provided as an independent and individual throttling component, resulting in poor throttling performance and likely leading to waste of heat sources. The throttling device and tableware treatment device according to some embodiments of the present disclosure may solve the above problems. The throttling device and the tableware treatment device according to some embodiments of the present disclosure may realize variable flow resistance under different operating conditions, thereby improving the efficiency of the heat pump.

Some technical solutions of the present disclosure may be described below with reference to the drawings and embodiments.

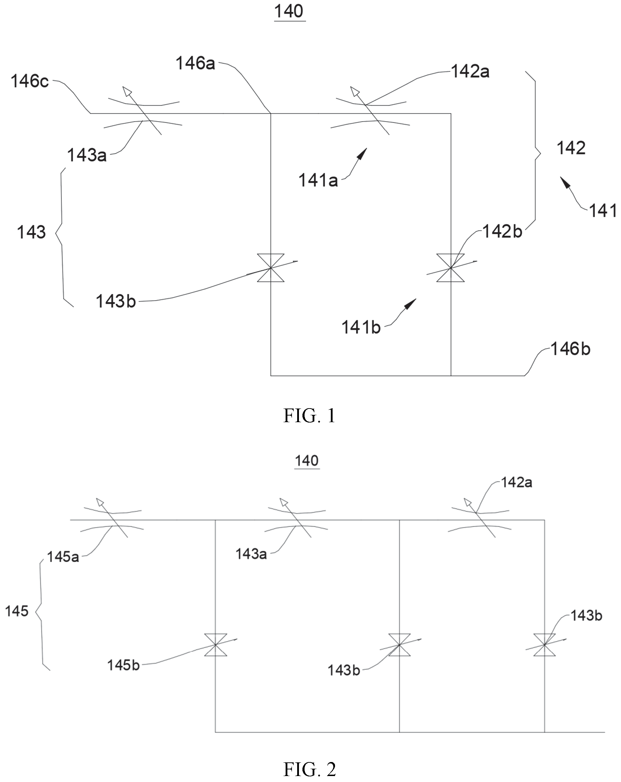

As shown in FIG. 1, according to some embodiments of the present disclosure, a throttling device 140 may be provided. The throttling device 140 may realize variable flow resistance under different operating conditions, thereby improving the efficiency of the heat pump.

According to some embodiments of the present disclosure, the throttling device 140 is disposed between two heat exchangers. The throttling device 140 may be configured in a tableware treatment device 100 or may be configured in a separate air conditioner or a separate heat pump unit.

In some embodiments, the throttling device 140 includes a plurality of throttling assemblies 141. Each throttling assembly 141 may include a throttling valve 141a and a control valve 141b connected to the throttling valve 141a in series. The control valve 141b of at least one of the throttling assemblies 141 is connected in parallel to at least one of the other throttling assemblies 141.

Each throttling assembly 141 may include the throttling valve 141a and the control valve 141b connected to the throttling valve 141a in series. The control valve 141b of at least one of the throttling assemblies 141 being connected in parallel to at least one of the other throttling assemblies 141, may indicate that the control valve 141b of one throttling assembly 141 is connected to another throttling assembly 141 in parallel. In a case where the control valve 141b of the one throttling assembly 141 is turned on, the another throttling assembly 141 may be short-circuited and only the throttling valve 141a corresponding to the control valve 141b of the one throttling assembly 141 may be conducted. In a case where the control valve 141b of the one throttling assembly 141 is turned off and the control valve 141b of the another throttling assembly 141 connected in parallel to the control valve 141b of the one throttling assembly 141 is turned on, two throttling valves 141a may be conducted. It can be understood that, the control valves 141b may cooperate with each other to conduct different numbers of the throttling valves 141a to obtain different flow rates. In other words, by cooperation of the different control valves 141b, the number of the throttling valves 141a may be adjusted to regulate the flow rate. In this way, throttling valves 141a with different flow rates may not be required, thereby reducing the cost of variable flow regulation.

Opening degrees of the throttling valves 141a may be identical or different. The flow rates may be adjusted according to the number of throttling valves being connected.

To more clearly describe the above structure, the throttling device 140 including two throttling assemblies is illustrated by way of example below.

In some embodiments, the plurality of throttling assemblies may include a first throttling assembly 142 and a second throttling assembly 143. The first throttling assembly 142 may include a first throttling valve 142a and a first control valve 142b. The second throttling assembly 143 may include a second throttling valve 143a and a second control valve 143b. The first control valve 142b may be connected to the first throttling valve 142a in series. The second control valve 143b may be connected to the second throttling valve 141a in series. The second control valve 143b may be connected in parallel to the first throttling valve 142a and the first control valve 142b.

That is, the second control valve 143b may be connected to two ends of the first throttling assembly 142, respectively, and may be connected to the entire first throttling assembly 142 in parallel. In a case where the first control valve 142b is turned on and the second control valve 143b is turned off, the first throttling valve 142a and the second throttling valve 141a may operate. The first throttling valve 142a and the second throttling valve 141a may be configured to perform flow restriction. In a case where the second control valve 143b is turned on and the first control valve 142b is turned off, only the second throttling valve 141a may operate. In this case, only the second throttling valve 141a may be configured to perform flow restriction.

As shown in FIG. 2, in a case where the throttling device 140 further includes a third throttling assembly 145, the third throttling assembly 145 may include a third throttling valve 145a and a third control valve 145b connected to the third throttling valve 145a. The third throttling valve 145a may be connected to the second throttling valve 141a in series. The third control valve 145b may be connected to the second throttling assembly 143 in parallel. In a case where the first control valve 142b is turned on and both the second control valve 143b and the third control are turned off, each of the first throttling valve 142a, the second throttling valve 141a, and the third throttling valve 145a may operate. Each of the first throttling valve 142a, the second throttling valve 141a, and the third throttling valve 145a may be configured to perform flow restriction. In a case where the second control valve 143b is turned on and both the first control valve 142b and the third control valve 145b are turned off, the second throttling valve 141a and the third throttling valve 145a may operate and the first throttling valve 142a may not operate. In a case where the third control valve 145b is turned on and both the first control valve 142b and the second control valve 143b are turned off, only the third throttling valve 145a may operate.

A connection relationship among the multiple throttling assemblies, the control valves 141b, the throttling valves 141b, or other components may be described as follows. In a case where the multiple throttling assemblies further include other throttling assemblies, the connection relationship may refer to the case in which the multiple throttling assemblies include the first throttling assembly 142 and the second throttling assembly 143, and the corresponding connection relationship will not be repeated.

In some embodiments, the first control valve 142b, the first throttling valve 142a, and the second throttling valve 141a may be sequentially connected. A first connection point 146a may be provided or defined between the first throttling valve 142a and the second throttling valve 141a. An end of the second control valve 143b may be connected to the first connection point 146a. That is, the second control valve 143b may be connected between the first throttling valve 142a and the second throttling valve 141a to short-circuit the first throttling valve 142a.

In some embodiments, an end of the second control valve 143b away from the first connection point 146a may be connected to an end of the first control valve 142b away from the first throttling valve 142a, thereby forming an input point 146b. An end of the second throttling valve 141a away from the first throttling valve 142a may form an output point 146c.

In some embodiments, the input point 146b and the output point 146c may be configured to connect with external components. In a case where the throttling device 140 is disposed between two heat exchangers, the input point 146b and the output point 146c may be respectively connected to the two heat exchangers.

In some embodiments, the first throttling valve 142a may be connected to the second throttling valve 141a in series.

According to some embodiments of the present disclosure, an operating principle of the throttling device 140 may be as follows. Each throttling assembly 141 may include the throttling valve 141a and the control valve 141b connected to the throttling valve 141a in series. The control valve 141b of at least one of the throttling assemblies 141 being connected in parallel to at least one of the other throttling assemblies 141, may indicate that the control valve 141b of one throttling assembly 141 is connected to another throttling assembly 141 in parallel. In a case where the control valve 141b is turned on, the another throttling assembly 141 may be short-circuited and only the throttling valve 141a corresponding to the turned-on control valve 141b may be conducted. In a case where the control valve 141b is turned off and the control valve 141b of the throttling assembly 141 connected to the turned-off control valve 141b in parallel is turned on, both throttling valves 141a may be conducted.

For the throttling device 140 according to some embodiments of the present disclosure, each throttling assembly 141 may include the throttling valve 141a and the control valve 141b connected to the throttling valve 141a in series. The control valve 141b of at least one of the throttling assemblies 141 being connected in parallel to at least one of the other throttling assemblies 141, may indicate that the control valve 141b of one throttling assembly 141 is connected to another throttling assembly 141 in parallel. In a case where the control valve 141b of the one throttling assembly 141 is turned on, the another throttling assembly 141 may be short-circuited and only the throttling valve 141a corresponding to the control valve 141b of the one throttling assembly 141 may be conducted. In a case where the control valve 141b of the one throttling assembly 141 is turned off and the control valve 141b of the another throttling assembly 141 connected in parallel to the control valve 141b of the one throttling assembly 141 is turned on, both throttling valves 141a may be conducted. That is to say, the control valves 141b may cooperate to conduct different numbers of the throttling valves 141a to obtain different flow rates. In other words, by cooperation of the different control valves 141b, the number of the throttling valves 141a may be adjusted to regulate the flow rate. In this way, throttling valves 141a with different flow rates may not be required, thereby reducing the cost of variable flow regulation.

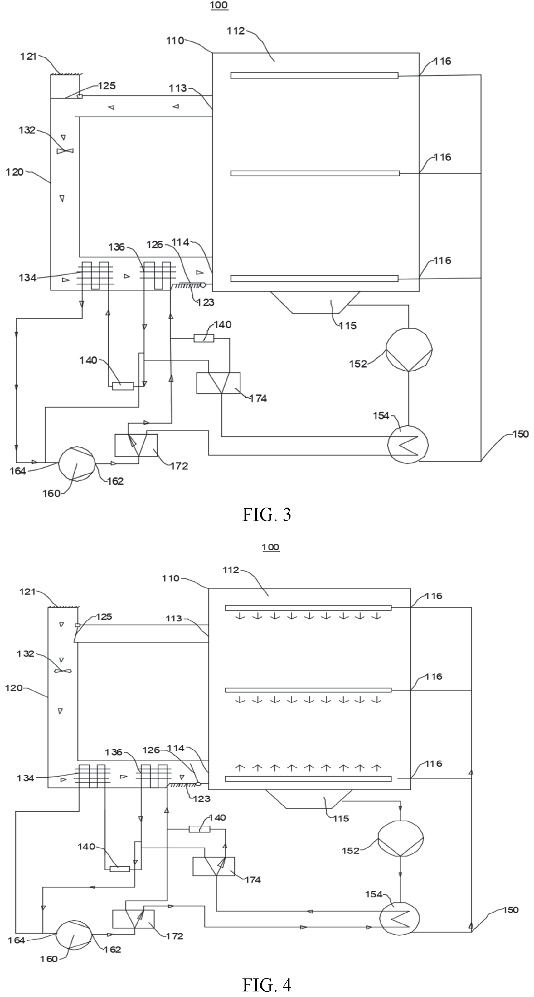

As shown in FIG. 3, based on the same inventive concept, some embodiments of the present disclosure may further provide a tableware treatment device 100. The tableware treatment device 100 may include a housing 110 defining an accommodating chamber 112, an air outlet in communication with the accommodating chamber 112, an air return port 114 in communication with the accommodating chamber 112, a water outlet 115 in communication with the accommodating chamber 112, and a water return port 116 in communication with the accommodating chamber 112. The accommodating chamber 112 may be configured to accommodate a tableware. The tableware treatment device 100 may further include an air return channel 120, a fan 132, a first heat exchanger 134, and a second heat exchanger 136. The air return channel 120 may be in communication with the air outlet 113 and the air return port 114. The fan 132, the first heat exchanger 134, and the second heat exchanger 136 may be all disposed in the air return channel 120. The first heat exchanger 134 may be disposed adjacent to the air outlet 113. The second heat exchanger 136 may be disposed adjacent to the air return port 114. The tableware treatment device 100 may further include a heat pump channel 150, a circulation pump 152, and a third heat exchanger 154. The heat pump channel 150 may be in communication with the water outlet 115 and the water return port 116. The circulation pump 152 and the third heat exchanger 154 may be disposed in the heat pump channel 150. The tableware treatment device 100 may further include a compressor 160. An outlet 164 of the compressor 160 may be connected to the first heat exchanger 134 and the third heat exchanger 154. An inlet 162 of the compressor 160 may be connected to the second heat exchanger 136 or the first heat exchanger 134.

The throttling device 140 as described above may be disposed between any two of the first heat exchanger 134, the second heat exchanger 136, and the third heat exchanger 154. That is, the throttling device 140 may be disposed between the first heat exchanger 134 and the second heat exchanger 136, may be disposed between the first heat exchanger 134 and the third heat exchanger 154, or may be disposed between the second heat exchanger 136 and the third heat exchanger 154.

In some embodiments, the housing 110 may be configured as a main body of the tableware treatment device 100 and as an installation base of the tableware treatment device 100. The housing 110 may provide the installation base for other components of the tableware treatment device 100. The housing 110 may further provide protective functions for other components of the tableware treatment device 100.

The accommodating chamber 112 may be configured to accommodate the tableware. Multiple levels of baskets may be disposed in the accommodating chamber 112. The tableware may be placed on the baskets. A spacing between the baskets may be different to accommodate the tableware of different types and sizes.

The air return channel 120 may be connected to the air outlet 113 and the air return port 114, thereby forming a drying branch. After the tableware cleaning is completed, the air return channel 120 may be configured to dry the tableware. The heat pump channel 150 may be configured to heat washing water. The washing water may be sprayed onto the tableware to achieve the purpose of cleaning.

In some embodiments, the throttling device 140 may be disposed between the first heat exchanger 134 and the second heat exchanger 136. The input point 146b of the throttling device 140 may be connected to the first heat exchanger 134. The input point 146b of the throttling device 140 may be connected to the second heat exchanger 136.

In some embodiments, the throttling device 140 may be disposed between the third heat exchanger 154 and one of the first heat exchanger 134 and the second heat exchanger 136. The input point 146b of the throttling device 140 may be connected to the third heat exchanger 154. The output point 146c of the throttling device 140 may be connected to the first heat exchanger 134 or the second heat exchanger 136.

In some embodiments, the air outlet 113 and the air return port 114 may be disposed on a same side of the housing 110. Such arrangement may facilitate the layout of the air return channel 120, reduce the space occupied by the air return channel 120, and allow the tableware treatment device 100 to be more compact, thereby enabling more space to be reserved for accommodating the tableware and increasing the capacity of the tableware treatment device 100.

In some embodiments, the air return channel 120 may define an air inlet 121 and an air exhaust port 123. The air inlet 121 may be defined between the first heat exchanger 134 and the air outlet 113. The air exhaust port 123 may be defined between the second heat exchanger 136 and the air return port 114. In a case where the circulation pump 152 is turned on, the air inlet 121 and the air exhaust port 123 may be turned on or opened, and the air outlet 113 and the air return port 114 may be turned off or closed.

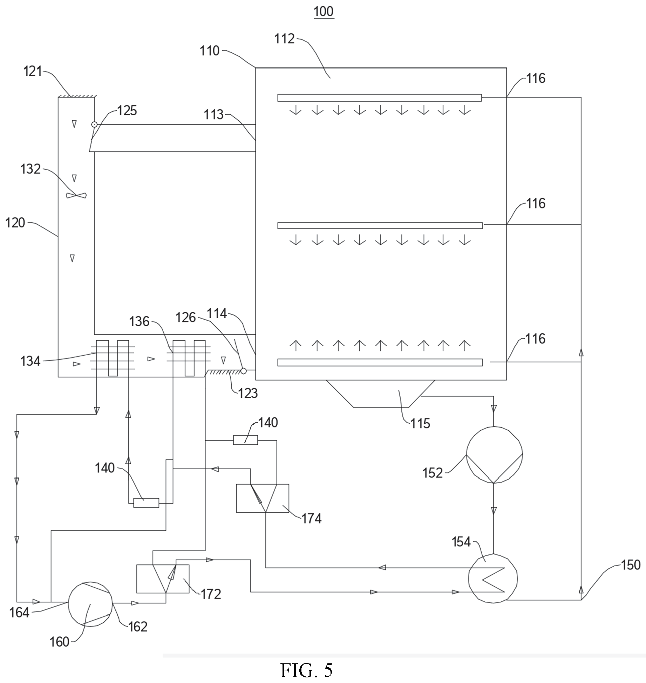

As shown in FIGS. 4 and 5, in a case where a heat pump system of the tableware treatment device 100 is in operation, the circulation pump 152 may be turned on. One of the first heat exchanger 134 and the second heat exchanger 136 may be configured to operate as an evaporator. The other one of the first heat exchanger 134 and the second heat exchanger 136 may not be in operation. In this way, air within the air return channel 120 may be cool air. To block the cool air from entering into the accommodating chamber 112, the air outlet 113 and the air return port 114 may be turned off or closed. That is, in a case where the circulation pump 152 is turned on, the air inlet 121 and the air exhaust port 123 may be turned on or opened, so that external air may enter into the air return channel 120, exchange heat with the first heat exchanger 134 or the second heat exchanger 136, and then be discharged from the air exhaust port 123.

Since either the first heat exchanger 134 or the second heat exchanger 136 may be configured to function as the evaporator, the air exhaust port 123 may be defined between the second heat exchanger 136 and the air return port 114. That is, the air inlet 121 may be defined adjacent to the air outlet 113. The air exhaust port 123 may be defined adjacent to the air return port 114.

In some embodiments, the tableware treatment device 100 may further include a first air valve 125. The first air valve 125 may be disposed between the air outlet 113 and the air inlet 121. The first air valve 125 may be configured to enable a communication between the air outlet 113 and the air return channel 120 and block a communication between the air return channel 120 and the air inlet 121. In some embodiments, the first air valve 125 may be configured to enable the communication between the air inlet 121 and the air return channel 120 and block the communication between the air outlet 113 and the air return channel 120.

The air inlet 121 and the air outlet 113 may be located close to each other. The air inlet 121 and the air outlet 113 may not be opened or closed at the same time. That is, during operation, either the air outlet 113 may be turned on or opened while the air inlet 121 is turned off or closed, or the air outlet 113 may be turned off or closed while the air inlet 121 is turned on or opened. In this way, only one air valve may be required to jointly control the air inlet 121 and the air outlet 113. The first air valve 125 may be disposed between the air inlet 121 and the air outlet 113. In a case where the tableware treatment device 100 operates in a drying mode, the first air valve 125 may be configured to open or turn on the air outlet 113 and close or turn off the air inlet 121, allowing moist hot air in the accommodating chamber 112 to enter into the air return channel 120. In a case where the tableware treatment device 100 operates in a heat pump mode, the first air valve 125 may be configured to close or turn off the air outlet 113 and open or turn on the air inlet 121.

In some embodiments, the tableware treatment device 100 may further include a second air valve 126. The second air valve 126 may be disposed between the air exhaust port 123 and the air return port 114. The second air valve 126 may be configured to enable a communication between the air exhaust port 123 and the air return channel 120 and block a communication between the air return port 114 and the air return channel 120. In some embodiments, the second air valve 126 may be configured to block a communication between the air exhaust port 123 and the air return channel 120 and enable the communication between the air return port 114 and the air return channel 120.

In some other embodiments, the air return port 114 and the air exhaust port 123 may be located close to each other. The air return port 114 and the air exhaust port 123 may not be opened or closed at the same time. That is, during operation, either the air exhaust port 123 may be turned on or opened while the air return port 114 is turned off or closed, or the air exhaust port 123 may be turned off or closed while the air return port 114 is turned on or opened. In this way, only one air valve may be required to jointly control the air return port 114 and the air exhaust port 123. The second air valve 126 may be disposed between the air return port 114 and the air exhaust port 123. In a case where the tableware treatment device 100 operates in the drying mode, the second air valve 126 may be configured to open or turn on the air return port 114 and close or turn off the air exhaust port 123, allowing dry hot air in the air return channel 120 to return to the accommodating chamber 112. In a case where the tableware treatment device 100 operates in the heat pump mode, the second air valve 126 may be configured to close or turn off the air return port 114 and open or turn on the air exhaust port 123, allowing the dry cool air in the air return channel 120 to be discharged through the air exhaust port 123 to the outside of the air return channel 120.

That is, in a case where the tableware treatment device 100 operates in the drying mode, the first air valve 125 may be configured to open or turn on the air outlet 113 and close or turn off the air inlet 121, and the second air valve 126 may be configured to open or turn on the air return port 114 and close or turn off the air exhaust port 123. In this way, the moist hot air in the accommodating chamber 112 may be enabled to enter into the air return channel 120 through the air outlet 113, thereby being dried by the first heat exchanger 134 and the second heat exchanger 136 to form dry hot air. The dry hot air in the air return channel 120 may flow back into the accommodating chamber 112 through the air return port 114. In a case where the tableware treatment device 100 operates in the heat pump mode, the first air valve 125 may be configured to close or turn off the air outlet 113 and open or turn on the air inlet 121, and the second air valve 126 may be configured to close or turn off the air return port 114 and open or turn on the air exhaust port 123. In this way, external air may be enabled to enter into the air return channel 120 through the air inlet 121, thereby exchanging heat with the first heat exchanger 134 or the second heat exchanger 136 to form dry cool air. The dry cool air in the air return channel 120 may be further discharged through the air exhaust port 123 to the outside of the air return channel 120.

In the description of the present specification, the terms "one embodiment," "some embodiments," "example," "concrete example," or "some examples," and the like, may indicate that certain features, structures, materials, or characteristics described in connection with the embodiment or example may be included in at least one embodiment or example of the present disclosure. The schematic expression of such terms herein may not necessarily refer to the same embodiment or example. Furthermore, the features, structures, materials, or characteristics described may be combined in one or more embodiments or examples in any suitable manner. In addition, those skilled in the art may combine and integrate different embodiments or examples described herein.

Moreover, the technical solutions of the respective embodiments may be combined with each other, provided that such combinations can be implemented by those skilled in the art. When the combination of technical solutions is contradictory or cannot be realized, it may be considered that such a combination does not exist and does not fall within the scope of protection of the present disclosure. Although the embodiments of the present disclosure have been illustrated and described, those skilled in the art may understand that various changes, modifications, substitutions, and alterations may be made to these embodiments without departing from the principles and spirit of the present disclosure. The scope of the present disclosure is defined by the appended claims and their equivalents.

## Claims

1. A throttling device, disposed between two heat exchangers and comprising a plurality of throttling assemblies, wherein each of the plurality of throttling assemblies comprises a throttling valve and a control valve connected to the throttling valve in series,
wherein the throttling valves of the plurality of throttling assemblies are connected in series, and the control valve of at least one of the plurality of throttling assemblies is connected in parallel to at least one of others of the plurality of throttling assemblies.

2. The throttling device as claimed in claim 1, wherein the plurality of throttling assemblies comprise a first throttling assembly and a second throttling assembly, wherein the first throttling assembly comprises a first throttling valve and a first control valve, and the second throttling assembly comprises a second throttling valve and a second control valve, wherein:
the first control valve is connected to the first throttling valve in series, the second control valve is connected to the second throttling valve in series, and the second control valve is connected in parallel to the first throttling valve and the first control valve.

3. The throttling device as claimed in claim 2, wherein:
the first control valve, the first throttling valve, and the second throttling valve are connected in sequence;
a first connection point is defined between the first throttling valve and the second throttling valve; and
an end of the second control valve is connected to the first connection point.

4. The throttling device as claimed in claim 3, wherein:
an end of the second control valve away from the first connection point is connected to an end of the first control valve away from the first throttling valve, forming an input point; and
an end of the second throttling valve away from the first throttling valve forms an output point.

5. The throttling device as claimed in any one of claims 2-4, wherein the first throttling valve and the second throttling valve are connected in series.

6. A tableware treatment device, comprising:
a housing, defining an accommodating chamber, an air outlet, an air return port, a water outlet, and a water return port, wherein the accommodating chamber is configured to accommodate a tableware, and the air outlet, the air return port, the water outlet, and the water return port are in communication with the accommodating chamber;
an air return channel, a fan, a first heat exchanger, and a second heat exchanger, wherein the air return channel is in communication with the air outlet and the air return port; the fan, the first heat exchanger, and the second heat exchanger are disposed in the air return channel; the first heat exchanger is disposed adjacent to the air outlet; and the second heat exchanger is disposed adjacent to the air return port;
a heat pump channel, a circulation pump, and a third heat exchanger, wherein the heat pump channel is in communication with the water outlet and the water return port, and the circulation pump and the third heat exchanger are disposed in the heat pump channel;
a compressor, wherein an outlet of the compressor is connected to the first heat exchanger and the third heat exchanger, and an inlet of the compressor is connected to the second heat exchanger or the first heat exchanger; and
the throttling device as claimed in any one of claims 1-5, disposed between any two of the first heat exchanger, the second heat exchanger, and the third heat exchanger.

7. The tableware treatment device as claimed in claim 6, wherein the throttling device is disposed between the first heat exchanger and the second heat exchanger, an input point of the throttling device is connected to the first heat exchanger, and the input point of the throttling device is connected to the second heat exchanger.

8. The tableware treatment device as claimed in claim 6 or claim 7, wherein:
the throttling device is disposed between the third heat exchanger and one of the first heat exchanger and the second heat exchanger; and
an input point of the throttling device is connected to the third heat exchanger, and an output point of the throttling device is connected to the first heat exchanger or the second heat exchanger.

9. The tableware treatment device as claimed in any one of claims 6-8, wherein the air outlet and the air return port are defined on a same side of the housing.

10. The tableware treatment device as claimed in any one of claims 6-9, wherein the air return channel defines an air inlet and an air exhaust port, wherein the air inlet is defined between the first heat exchanger and the air outlet, and the air exhaust port is defined between the second heat exchanger and the air return port; and
in a case where the circulation pump is turned on, the air inlet and the air exhaust port are turned on, and the air outlet and the air return port are turned off.
